# EUROPÄISCHE PATENTSCHRIFT

(11) **EP 1 456 552 B1**
(45) Veröffentlichungstag und Bekanntmachung des Hinweises auf die Patenterteilung: **21.03.2012**
(21) Anmeldenummer: 02774396.2
(22) Anmeldetag: 20.09.2002
(51) Int. Cl.: F16D 41/10

(54) **LASTDREHMOMENTSPERRE**
LOAD TORQUE BLOCKING DEVICE
DISPOSITIF DE BLOCAGE DE COUPLES DE CHARGE

(30) Priorität: 11.12.2001 DE 10160684
(43) Veröffentlichungstag der Anmeldung: 15.09.2004
(73) Patentinhaber: ROBERT BOSCH GMBH, 70442 Stuttgart (DE)
(72) Erfinder: DREWE, Ingo, 77815 Buehl (DE); SCHNEIDER, Guido, 58453 Witten (DE)
(86) Internationale Anmeldenummer: PCT/DE2002/003544
(87) Internationale Veröffentlichungsnummer: WO 2003/054409

(56) Entgegenhaltungen:
- EP-A- 1 122 390
- DE-A- 19 753 106
- US-A- 2 444 592
- PATENT ABSTRACTS OF JAPAN vol. 1995, no. 02, 31. März 1995 (1995-03-31) -& JP 06 313448 A (NTN CORP), 8. November 1994 (1994-11-08)

## Beschreibung

### Stand der Technik

Die Erfindung betrifft eine Lastdrehmomentsperre zum selbstständig Sperren lastseitiger Drehmomente nach dem Oberbegriff des Patentanspruchs 1.

Lastdrehmomentsperren gehören zur Gattung der selbsttätig arretierenden Gesperre und sind von ihrer Funktionsweise her mit selbstschaltenden Freilaufkupplungen verwandt. Sie werden als Sperrelement in einem Antriebsstrang eingebaut und sperren beim Stillstand des Antriebes selbsttätig die vom Abtrieb in einer oder in beiden Drehrichtungen eingeleiteten Drehmomente, während die von der Antriebsseite eingeleiteten Drehmomente in der einen oder anderen Drehrichtung übertragen werden. Somit können lastseitig wirkende Drehmomente in einem Antriebsstrang mit Hilfe der Lastdrehmomentsperre gegenüber einem feststehenden Gestell oder Gehäuse abgestützt und gesperrt werden. Sie bildet ein Sicherheitselement, das ein unzulässiges Bewegen der Lastseite durch äußere Kräfte beziehungsweise Momente bei einem Abfall oder Ausfall des Antriebes verhindert. Solche Drehmomentsperren eignen sich besonders für den Einsatz in Antriebssträngen mit wechselnder Drehrichtung. Durch ihren Einbau können auf sonst erforderliche Bremssysteme oder auf selbsthemmende Getriebe verzichtet werden.

Für Lastdrehmomentsperren werden derzeit schon verschiedenartige physikalische Effekte ausgenutzt. So wird beispielsweise gemäß der DE 30 30 767 C2 eine Schraubenfedersperre für handgetriebene Hebezeuge verwendet, welche einen reibschlüssigen Schlingbandeffekt ausnutzt. Ferner ist gemäß G 89 10 857 die Ausnutzung eines Reibklemmeffektes bekannt, wonach Klemmrollen mit einer profilierten Abtriebswelle zusammenwirken. Ferner wird gemäß der DE-AS 12 49 603 eine Lastdrehmomentsperre beschrieben, bei der eine Klauenkupplung mit doppelseitig wirkenden Klemmkörpern ausgerüstet ist.

Diese Systeme beruhen auf reibschlüssigen Wirkungsprinzipien und benötigen für eine ständige Sperrbereitschaft eine gewisse Vorspannung der Klemm- beziehungsweise Sperrelemente, um beim Auftreten von Lastdrehmomenten rasch und zuverlässig mit gestellfesten Bauteilen zusammenzuwirken. Aufgrund dieser Vorspannung der Klemm- bzw. Sperrelemente, die auch bei einem antriebsseitigen Durchtreiben nicht vollständig aufgehoben wird, bleiben sie ständig im Reibkontakt zu den gestellfesten Bauteilen. Dadurch ergeben sich jedoch hohe Reibungsverluste und schlechte Wirkungsgrade, die bei hohen zu übertragenden Drehzahlen zu einer starken Erwärmung führen. Das Einsatzgebiet der nach den bekannten reibschlüssigen Wirkungsprinzipien arbeitenden Lastdrehmomentsperren ist somit auf Antriebe mit geringen Drehzahlen beschränkt.

Eine weitere Bauform der Lastdrehmomentsperren ist aus der DE 197 53 106 C2 bekannt, welche auf dem Verkantungs- und Verschwenkungseffekt beruht. Die dort verwendeten Klemm- bzw. Sperrkörper werden durch Drehen der Antriebswelle von Treibelementen auf einer Umlaufbahn mitgenommen, welche einen relativ großen radialen Abstand zur Drehachse der Lastdrehmomentsperre hat. Durch diese aussermittige Anordnung der Klemm- bzw. Sperrkörper entstehen beim antriebsseitigen Durchtreiben Fliehkräfte, die nun ihrerseits ein unerwünschtes Verkanten der Klemm- bzw. Sperrkörper hervorrufen können. In der Patentschrift ist zu Figur 9 zwar erwähnt, dass zur Vermeidung von Reibkontakten der Klemm- bzw. Sperrkörper mit der gestellfesten Klemm- bzw. Sperrringeinheit durch auftretende Fliehkräfte diese Fliehkräfte durch eine bestimmte Ausgestaltung über die Anbauteile der Abtriebswelle abgestützt werden können. Dies ist jedoch nur in einem bestimmten von der Antriebsdrehzahl und dem Drehmoment abhängigen Betriebspunkt der Fall.

**Die** US 2 444 592 A **zeigt eine Drehmomentsperre mit einem scheibenförmigem Bremselement, das mehrere Löcher aufweist, in die Pins der An- und Abtriebswelle eingreifen.**

Mit der vorliegenden Lösung wird angestrebt, eine Lastdrehmomentensperre derart auszugestalten, dass über den gesamten Drehzahlbereich ein unzulässiges Ansprechen der Lastdrehmomentsperre durch Fliehkräfte zuverlässig vermieden wird.

### Vorteile der Erfindung

Die erfindungsgemäßen Lastdrehmomentsperren mit dem im Kennzeichnungsteil des Patentanspruchs 1 aufgeführten Merkmal hat den Vorteil, dass durch die Verlegung des Klemmkörper-Masseschwerpunktes In den Bereich der Drehachse das Auftreten von Fliehkräften am Klemmkörperweitgehend vermieden wird, was zur Folge hat, dass über den gesamten Drehzahlbereich ein durch Fliehkräfte bedingtes Verschwenken des Sperrkörpers und ein dadurch ausgelöstes Sperren der Antriebslast zuverlässig vermieden wird. Daraus ergibt sich als weiterer Vorteil, dass eine derartige Lastdrehmomentsperre auch für schneillaufende Antriebe, wie beispielsweise Elektromotoren zum Antrieb von Verstellern oder hin- und hergehenden Komponenten bevorzugt anzuwenden ist. **So wird der Sperrkörper in einfach herstellbarer und platzsparender Weise als Sperrscheibe gestaltet, welche senkrecht zur Drehachse im Gehäuse angeordnet und vorzugsweise kreis- bzw. kreisringförmig ausgebildet ist.**

Vorteilhafte Weiterbildungen und Verbesserungen des im Patentanspruch 1 angegebenen Merkmals ergeben sich durch die in den unteransprüchen aufgeführten Maßnahmen.

Ein schnelles und effektives Festklemmen oder Lösen der Sperrscheibe am gehäusefesten Sperrring durch geringes Verschwenken der Sperrscheibe wird dadurch erzielt, dass die Sperrscheibe mindestens zwei auf unterschiedlichen Radien und in Umfangsrichtung um einen Winkel zueinander versetzte Sperrmittel aufweist, von denen das eine Sperrmittel mit der Aussenseite des gehäusefesten Sperrringes und das andere Sperrmittel mit dessen innenseite zusammenwirkt.

Um beim Ansprechen der Lastdrehmomentsperre einer eventuellen Schiefstellung der Sperrscheibe entgegen zu wirken, sowie eine axiale Anfederung der Sperrscheibe zu vermeiden, wird vorgeschlagen, dass auf beiden Stirnseiten der Sperrscheibe je zwei miteinander fluchtende Sperrmittel spiegelbildlich angeordnet sind, die mit je einem von zwei beidseitig zur Sperrscheibe gehäusefest angeordneten Sperrringen zusammenwirken.

Zur Erzielung einer zuverlässigen Verklemmung der Klemmbolzen an den Sperrringen sind diese in konstruktiv robuster und einfach herzustellender Weise als konzentrisch zur Drehachse von je einer Stirnseite des Gehäuses nach innen bis vor die Sperrscheibe vorstehende Sperrringwand ausgebildet, an deren Aussen- und Innenumfangsfläche je ein Klemmbolzen der Sperrscheibe anzugreifen vermag. Für Lastdrehmomentsperren mit relativ kleinen gegebenenfalls auftretenden Lastdrehmomenten kann alternativ auf eine beidseitig zur Sperrscheibe angeordnete Sperrringwand verzichtet werden, indem diese nur auf einer Stirnseite der Sperrscheibe angeordnet ist. Dadurch lässt sich die axiale Breite des Gehäuses verringern.

Für ein möglichst geringes Verschwenken der Sperrscheibe zur Erzielung eines schnellen Ansprechens und Lösens der Lastdrehmomentsperre sind zweckmäßigerweise die Sperrmittel in einem radial äußeren Bereich der Sperrscheibe angeordnet, wobei die Treib- und Sperrelemente der Antriebs- und Abtriebswelle zum Verschwenken der Sperrscheibe an deren radial inneren Bereich angreifen.

Für die Anordnung der Treib- und Sperrelemente ist es wichtig, dass diese zum Verschwenken der Sperrscheibe für das Sperren und Lösen der Lastdrehmomentsperre beim Verdrehen der Antriebs- bzw. der Abtriebswelle möglichst effektiv mit der Sperrscheibe zusammenwirken. Zu diesem Zweck wird gedanklich über die Drehachse eine erste Ebene aufgespannt, welche durch die Sperrmittel (Klemmbolzen) verläuft und bezogen auf diese erste Ebene wird das mindestens eine Treibelement auf der einen Seite und das mindestens eine Sperrelement auf der anderen Seite dieser Ebene angeordnet, wobei diese Elemente an der Sperrscheibe derart angreifen, dass sie die Sperrscheibe zum Lösen beziehungsweise Sperren der Sperrmittel (Klemmbolzen) senkrecht zu dieser ersten Ebene in die eine beziehungsweise entgegengesetzte andere Richtung verschwenken.

Um für beide Drehrichtungen eine Lastdrehmomentsperre wirksam werden zu lassen, ist für jede Drehrichtung je ein Treibelement und je ein Sperrelement vorgesehen, welches an der Sperrscheibe angreift. Da zum Sperren beziehungsweise zum Lösen der Lastdrehmomentsperre die Sperrscheibe unabhängig von der Drehrichtung der An- und Abtriebswelle nur in die eine beziehungsweise nur in die entgegengesetzte andere Drehrichtung verschwenkt werden darf, müssen die Treib- und Sperrelemente für jede Drehrichtung dementsprechend angeordnet sein. Zu diesem Zweck wird eine zweite Ebene über die Drehachse aufgespannt, die senkrecht zur ersten Ebene verläuft und bezogen auf diese zweite Ebene wird je ein Treib- und ein Sperrelement auf der einen Seite und je ein Treib- und ein Sperrelement auf der anderen Seite dieser zweiten Ebene an der Sperrscheibe angreifend angeordnet.

Um möglichst definierte Berührungspunkte zwischen den Treibelementen beziehungsweise Sperrelementen und der Sperrscheibe zu gewährleisten, werden in einfacher und robuster Weise die Treibelemente als achsparallel zur Drehachse von einem flanschartigen Ende der Antriebswelle vorstehende Treibbolzen ausgebildet, die jeweils in eine größere Ausnehmung der Sperrscheibe eingreifen. Ferner werden in entsprechender Weise die Sperrelemente als achsparallel zur Drehachse von einem flanschartigen Ende der Abtriebswelle vorstehende Sperrbolzen ausgebildet, die vorzugsweise zusammen mit einem Federelement jeweils in eine größere Ausnehmung der Sperrscheibe eingreifen.

Besonders zweckmäßig bezüglich der Wirkungslinien der von den Treib- und Sperrelementen ausgehenden Kraft zum Verschwenken der Sperrscheibe ist es, wenn in der Ruhelage der Sperrscheibe das mindestens eine Treibelement auf seiner der ersten Ebene zugewandten Seite einen Berührungspunkt mit der Sperrscheibe bildet und wenn ferner das mindestens eine Sperrelement auf seiner der ersten Ebene zugewandten Seite einen geringen Abstand zu einem Berührungspunkt mit der Sperrscheibe aufweist. In vorteilhafter Weise wird dabei der vorerwähnte Abstand von einem Federelement überbrückt, das an dem als Sperrelement dienenden Sperrbolzen angeordnet ist.

Für eine kompakte und robuste Ausbildung der Lastdrehmomentsperre wird ferner vorgeschlagen, dass die flanschartigen Enden der Antriebs- und Abtriebswelle an den gegenüberliegenden Stirnseiten des Gehäuses gelagert sind. In konstruktiv einfacher und sicherer Weise wird dabei die Sperrscheibe zwischen den voneinander beabstandeten, flanschartigen Enden der Antrieb- und Abtriebswelle angeordnet. Da durch die Lage der Berührungspunkte der Treib- und Sperrelemente mit den entsprechenden Ausnehmungen der Sperrscheibe die beim Sperren beziehungsweise Öffnen der Lastdrehmomentsperre dort wirksam werdenden Kräfte zum geringen Verschwenken der Sperrscheibe nahezu senkrecht zur ersten Ebene verlaufen, wird gleichzeitig erreicht, dass bei geöffneter Sperre im Normalbetrieb bei einem Antriebsdrehmoment keine signifikante Reibkraft zwischen gehäusefestem Sperrring und den Sperrmitteln (Klemmbolzen) auftritt, so dass auf zusätzliche Maßnahmen für einen berührungsfreien Umlauf am Sperrring verzichtet werden kann. Für eine möglichst stabile Lagerung der An- und Abtriebswelle wird ferner vorgeschlagen, dass die Sperrscheibe mit einer zentrischen Öffnung versehen ist, durch die ein Lagerzapfen der Abtriebswelle hindurchragt, der in einem in einer stirnseitigen Lagerbohrung der Abtriebswelle eingesetzten Lager aufgenommen ist. Alternativ kann dies auch in umgekehrter Weise durch einen an der Abtriebswelle gelagerten Lagerzapfen der Antriebswelle erfolgen.

Um die durch die Sperrmittel der Sperrscheibe verursachte Unwucht auszugleichen, wird zweckmäßigerweise vorgeschlagen, an dem den Sperrmitteln diametral gegenüberliegenden Umfangsbereich der Sperrscheibe eine Materialanhäufung derart anzuordnen, dass der Masseschwerpunkt der Sperrscheibe möglichst genau auf der Drehachse liegt. Alternativ zu dieser Materialanhäufung ist es auch möglich, zum gleichen Zweck im Bereich der Sperrmittel (Klemmbolzen) an der Sperrscheibe eine Materialreduzierung, z.B. durch in Umfangsrichtung beidseitig neben den Sperrmitteln (Klemmbolzen) angebrachte Bohrungen in der Sperrscheibe vorzunehmen.

Eine kompakte Lastdrehmomentsperre lässt sich in vorteilhafter Weise dadurch erzielen, dass das Gehäuse innen zylindrisch ausgebildet ist, wobei zwischen der Sperrscheibe und der Innenwand des Gehäuses ein für die Schwenkbewegung der Sperrscheibe zum Lösen beziehungsweise Sperren der Sperrmittel (Klemmbolzen) ausreichender Ringluftspalt liegt. Bei dieser Ausführungsform kann das am Innenumfang des Sperrringes angreifende Sperrmittel der Sperrscheibe alternativ auch am Außenumfang der Sperrscheibe angeordnet sein und dort durch Verschwenken der Sperrscheibe an der Innenwand des Gehäuses angreifen.

Anstelle der in Ausnehmungen der Sperrscheibe eingreifenden, an den flanschartigen Enden der Antrieb- und Abtriebswelle befestigten Treib- und Sperrbolzen können diese alternativ in umgekehrter Weise auch an der Sperrscheibe befestigt sein und in entsprechende Ausnehmungen der flanschartigen Enden der Antrieb- und Abtriebswelle eingreifen.

Für eine besonders vorteilhafte Verwendung der Lastdrehmomentsperre wird vorgeschlagen, diese mit einem Elektromotor zu einer Antriebseinheit zusammenzufassen, indem die Abtriebswelle des Elektromotors zugleich die Antriebswelle der Lastdrehmomentsperre bildet. Ferner lässt sich die Lastdrehmomentsperre bevorzugt auch dort einsetzen, wo bislang selbsthemmende Getriebe mit einem Wirkungsgrad < 50% eingesetzt werden. Zu diesem Zweck wird vorgeschlagen, dass die Lastdrehmomentsperre zwischen der Abtriebswelle eines Elektromotors und der Antriebswelle einer nicht selbsthemmenden Getriebeeinheit eingesetzt wird. Ein solches System hat den Vorteil, dass durch die Verwendung eines leichtgängigen Getriebes der Gesamtwirkungsgrad des Systems deutlich über 50% angehoben wird. Weiterhin werden die mit einer Lastdrehmomentsperre verbundenen funktions- und/oder fertigungsbedingten Drehwinkelspiele nur zu einem der Getriebeübersetzung entsprechenden Anteil auf den Getriebeausgang übertragen. Ferner werden abtriebsseitig eingeleitete Drehbewegungen in beide Drehrichtung unter Beibehaltung der antriebsseitigen Möglichkeit zur Leistungsübertragung gesperrt. Durch die Wirkungsgradverbesserung eines solchen Systems kann folglich bei gleicher Abtriebsleistung ein Elektromotor kleinerer Bauform verwendet werden mit den Vorteilen einer Kostenersparnis, eines kleineren Bauraumes, einer geringeren Masse und Massenträgheit, eines besseren dynamischen Verhaltens, einer geringeren Energieaufnahme und besserer Einbaubedingungen.

### Zeichnung

Weitere Einzelheiten der Erfindung sind in den nachfolgend beschriebenen Ausführungsbeispielen anhand der zugehörigen Zeichnungen näher erläutert. Es zeigen:
Figur 1 eine erfindungsgemäße Lastdrehmomentsperre im Querschnitt nach der Linie I-I aus Figur 2,
Figur 2 zeigt die gleiche Lastdrehmomentsperre im Längsschnitt des Gehäuses,
Figur 3 zeigt eine Antriebseinheit aus Elektromotor und Lastdrehmomentsperre in schematischer Blockdarstellung und
Figur 4 zeigt ein Antriebssystem aus Elektromotor, Lastdrehmomentsperre und Getriebeeinheit in schematischer Blockdarstellung.

### Beschreibung der Ausführungsbeispiele

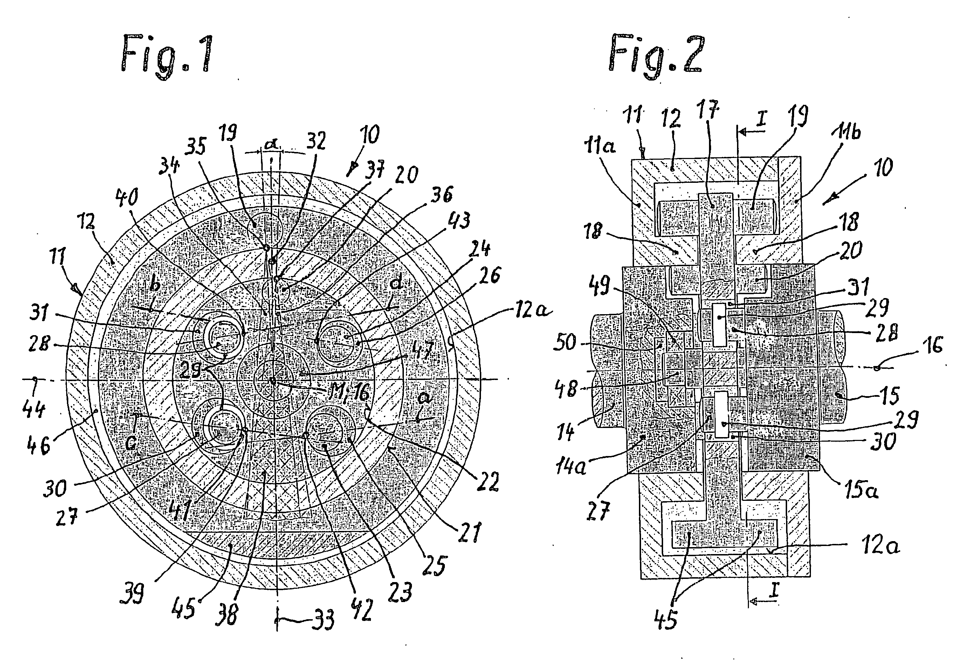

Die Figuren 1 und 2 zeigen eine erfindungsgemäß Lastdrehmomentsperre 10 im Querschnitt beziehungsweise Längsschnitt. Es hat ein feststehendes, gestellfestes Gehäuse 11 mit einer äußeren zylindrisch ausgebildeten Gehäusewand 12 und flanschartigen Stirnseiten 11a und 11b, an denen auf der einen Seite 11a eine Antriebswelle 14 mit einem flanschartigen Ende 14a und auf der anderen Seite 11b eine Abtriebswelle 15 mit einem flanschartigen Ende 15a drehbar gelagert ist. Antriebs- und Antriebswelle 14, 15 liegen auf einer gemeinsamen Drehachse 16. Zwischen ihren voneinander beabstandeten, flanschartigen Enden 14a, 15a ist ein Sperrkörper in Form einer Sperrscheibe 17 im Gehäuse 11 angeordnet, die über Sperrmitteln mit gehäusefesten Sperrringen zusammenwirkt. Die Sperrringe sind im Ausführungsbeispiel als konzentrisch zur Drehachse 16 von den beiden Stirnseiten 11a, 11b des Gehäuses 11 nach innen bis vor die Sperrscheibe 17 vorstehende Sperrringwände 18 ausgebildet. Als Sperrelemente dienen zwei in die Sperrscheibe 17 achsparallel zur Drehachse 16 fest eingesetzte Klemmbolzen 19 und 20, welche spiegelbildlich beidseitig von der Sperrscheibe 17 abstehen. Die Klemmbolzen 19 und 20 bilden somit auf beiden Seiten der Sperrscheibe 17 je zwei miteinander fluchtende Sperrmittel, die mit je einer der beidseitig zur Sperrscheibe 17 gehäusefesten Sperrringwände 18 zusammenwirken. Die beiden Klemmbolzen 19 und 20 sind im äußeren Umfangsbereich der Sperrscheibe 17 auf unterschiedlich großen Radien angeordnet, wobei der Klemmbolzen 19 mit dem größeren Radius zur Drehachse 16 mit der Aussenseite 21 und der Klemmbolzen 20 mit dem kleineren Radius zur Drehachse 16 mit der Innenseite 22 der beiden Sperrringwände 18 zusammenwirkt. Um die Klemmbolzen 19 und 20 an den Sperrringwänden 18 durch ein geringes, quer zur Drehachse 16 beidseitiges Verschwenken festklemmen beziehungsweise lösen zu können, sind die beiden Klemmbolzen 19 und 20 in Umfangsrichtung um einen Winkel α zueinander versetzt, der im Beispielsfall etwa 5° beträgt. Die Aussen-und Innenseite 21, 22 der Sperrringwände 18 bilden somit Angriffsflächen für die Klemmbolzen 19 und 20 zum Festsetzen der Sperrscheibe 17.

Während die Klemmbolzen 19 und 20 in einem radial äußeren Bereich der Sperrscheibe 17 angeordnet sind, greifen in einem radial inneren Bereich Treib- und Sperrelemente der Antriebs- und Abtriebswelle 14, 15 zum Verschwenken der Sperrscheibe 17 an. Dabei werden die Treibelemente durch achsparallel zur Drehachse 16 von dem flanschartigen Ende 14a der Antriebswelle 14 vorstehende Treibbolzen 23, 24 gebildet, die in jeweils eine größere Ausnehmung 25, 26 in Form einer Bohrung der Sperrscheibe 17 eingreifen. Die Sperrelemente werden hier von zwei achsparallel zur Drehachse 16 von dem flanschartigen Ende 15a der Abtriebswelle 15 vorstehende Sperrbolzen 27, 28 gebildet, die mit einem dort aufgesetzten Federelement in Form eines Ringes 29 aus elastischem Material in je eine größere Ausnehmung 30, 31 in Form einer Bohrung der Sperrscheibe 17 eingreifen. Durch Drehen der Antriebs- oder Abtriebswelle 14, 15 in die eine oder andere Drehrichtung ist die Sperrscheibe 17 von jeweils einem Treibbolzen 23, 24 oder Sperrbolzen 27, 28 um eine nicht feste, anisotrophe, zwischen den beiden Klemmbolzen 19, 20 verlaufende Schwenkachse 32 zur einen oder anderen Seite etwas verschwenkbar.

Bei dem Ausführungsbeispiel nach Figur 1 muß zum Festklemmen der Klemmbolzen 19 und 20 an den Sperrringwänden 18 die Sperrscheibe etwas nach rechts verschwenkt werden, während sie zum Lösen der Klemmbolzen 19, 20 von den Sperrringwänden 18 etwas nach links verschwenkt werden muß. Um dies sicherzustellen, ist ein entsprechender Eingriff der Treib-und Sperrbolzen 23, 24 und 27, 28 an der Sperrscheibe 17 erforderlich. Zu diesem Zweck ist über die Drehachse 16 eine durch die Klemmbolzen 19, 20 verlaufende erste Ebene 33 aufgespannt. Bezogen auf diese Ebene 33 sind nunmehr die Treibbolzen 23, 24 der Antriebswelle 14 auf der rechten Seite und die Sperrbolzen 27, 28 der Abtriebswelle 15 auf der anderen, linken Seite dieser Ebene 33 an der Sperrscheibe 17 angreifend angeordnet. Ferner ist eine physikalisch-mathematische Voraussetzung zum Verklemmen oder Lösen der Sperrscheibe, dass zum Erzielen einer Gleichgewichtslage durch den sogenannten Verkantungseffekt eine äußere Kraft auf den verkanteten Körper durch den Schnittbereich der Reibungswinkel an den Berührungsstellen verlaufen muß. In Figur 1 sind die an den Berührungspunkten zwischen Klemmbolzen 19, 20 und Sperrringwänden 18 auftretende, nach unten verlaufende Reibungswinkel dargestellt. Ein erster Reibungswinkel 34 verläuft vom Berührungspunkt 35 des oberen Klemmbolzens 19 mit der Aussenseite der Sperrringwand 18 radial nach innen und ein zweiter Reibungswinkel 36 verläuft vom Berührungspunkt 37 des inneren Klemmbolzens 20 mit der Innenseite 22 der Sperrringwand 18 radial nach innen. Die beiden Reibungswinkel 34 und 36 sind entgegengesetzt schraffiert dargestellt. Sie bilden einen Schnittbereich 38 mit gekreuzter Schraffur, durch den auch die vorgenannte erste Ebene 33 verläuft. Die Treib- und Sperrbolzen 23, 24 und 27, 28 sind in den Ausnehmungen 25, 26 und 30, 31 der Sperrscheibe 17 nun derart angeordnet, dass in der Ruhelage der Sperrscheibe 17 nach Figur 1 einerseits die Treibbolzen 23, 24 der Antriebswelle 14 auf ihren der ersten Ebene 33 zugewandten Seiten jeweils einen Berührungspunkt 42, 43 mit der Sperrscheibe 17 bilden. Andererseits haben die Sperrbolzen 27, 28 auf ihrer der ersten Ebene 33 zugewandten Seite jeweils einen geringen Abstand 41 zu einem Berührungspunkt 39, 40 mit der Sperrscheibe 17, wobei der elastische Ring 29 als Federelement der Sperrbolzen 27, 28 diesen Abstand 41 jeweils überbrückt. Durch diese Anordnung greifen die Treib- und Sperrbolzen 23, 24 und 27, 28 derart an der Sperrscheibe 17 an, dass diese zum Lösen beziehungsweise Sperren der Klemmbolzen 19, 18 senkrecht zu der ersten Ebene 33 in die eine beziehungsweise entgegengesetzte andere Richtung etwas verschwenkbar ist.

Die Anordnung der Treib- und Sperrbolzen 23, 24 und 27, 28 ist ferner derart zu wählen, dass für beide Drehrichtungen sowohl ein Durchtrieb von der Antriebswelle 14 als auch ein Auslösen der Drehmomentsperre 10 durch Drehen der Abtriebswelle 15 bei fehlendem Antrieb möglich ist. Zu diesem Zweck greift für jede der beiden Drehrichtungen je ein Treibbolzen 23, 24 und je ein Sperrbolzen 27, 28 an der Sperrscheibe 17 an. Für eine entsprechende Anordnung der Treib- und Sperrbolzen wird nunmehr senkrecht zur ersten Ebene 33 eine zweite Ebene 44 über die Drehachse 16 aufgespannt. Bezogen auf diese zweite Ebene 14 ist nunmehr je ein Treib- und Sperrbolzen 23 und 27 auf der unteren Seite und je ein Treib- und Sperrbolzen 24 und 28 auf der oberen Seite dieser zweiten Ebene 44 angeordnet, um dort an der Sperrscheibe 17 anzugreifen.

Ein erfindungswesentliches Merkmal der Lastdrehmomentsperre 10 ist die Ausbildung der Sperrscheibe 17 derart, dass ihr Masseschwerpunkt M im Bereich der Drehachse 16 der miteinander fluchtenden Antriebs- und Abtriebswelle 14, 15 liegt. Da nun die Anordnung der Klemmbolzen 19 und 20 im äußeren Umfangsbereich der Sperrscheibe 17 eine Unwucht bewirken würde, ist an dem den Klemmbolzen 19, 20 diametral gegenüberliegenden Umfangsbereich der Sperrscheibe 17 eine nierenförmige Materialanhäufung 45 beidseitig an der Sperrscheibe 17 derart angeordnet, dass der Masseschwerpunkt M der Sperrscheibe 17 möglichst genau auf der Drehachse 16 liegt. Außerdem ist die Sperrscheibe 17 derart innerhalb des Gehäuses 11 angeordnet, dass zwischen ihr und der Innenwandung 12a der äußeren Gehäusewand 12 ein für die Schwenkbewegung der Sperrscheibe 17 zum Lösen beziehungsweise Sperren der Klemmbolzen 19, 20 ausreichender Ringluftspalt 46 liegt. Ferner ist die Sperrscheibe 17 mit einer zentrischen Bohrung 47 versehen, durch die ein Lagerzapfen 48 an dem flanschartigen Ende 15a der Abtriebswelle 15 hindurchragt. Der Lagerzapfen 48 ist in einem Lager 49 aufgenommen, das in einer stirnseitigen Lagerbohrung 50 der Antriebswelle 14 eingesetzt ist.

Die Wirkungsweise der Lastdrehmomentsperre 10 nach Figur 1 und 2 ist derart, dass in der dargestellten Ruhelage die Sperrscheibe 17 durch die Treib- und Sperrbolzen 23, 24 und 27, 28 zwischen der Antriebs- und Abtriebswelle 14, 15 aufgenommen ist, wobei die Klemmbolzen 19, 20 von den elastischen Ringen 29 der Sperrbolzen 27, 28 mit geringer Kraft gegen die Sperrringwände 18 gedrückt werden. Die Lastdrehmomentsperre ist somit definiert vorgespannt.

Wird nun die Antriebswelle 14 von einem nicht dargestellten Antrieb in die eine oder andere Drehrichtung angetrieben, so werden dementsprechend auch die Treibbolzen 23 und 24 nach rechts oder links gedreht. Um diese Drehung über die Sperrscheibe 17 auch auf die Abtriebswelle 15 zu übertragen, muß auch die Sperrscheibe 17 mitumlaufen. Dies geschieht im Hinblick auf Figur 1 wie folgt:
Bei Rechtsdrehung tritt am Berührungspunkt 42 des Treibbolzens 23 mit der Sperrscheibe 17 eine Kraft in Richtung der Wirklinie a auf, die durch den Schnittbereich 38 der beiden von den Klemmbolzen 19, 20 ausgehenden Reibungswinkel 34, 36 verläuft mit der Folge, dass dadurch die Sperrscheibe 17 um die angenommene Schwenkachse 32 soweit verschwenkt und dabei den elastischen Ring 29 zusammendrückt, bis diese Kraft am Berührungspunkt 39 der Sperrscheibe 17 mit dem Sperrbolzen 27 von diesem aufgenommen wird. Dadurch werden die Berührungen der beiden Klemmbolzen 19, 20 an den Sperrringwänden 18 praktisch aufgehoben und die Sperrscheibe 17 läuft reibungsfrei mit der Antriebswelle 15 um. Da die Sperrscheibe 17 über den Berührungspunkt 39 auch den Sperrbolzen 27 mitnimmt, läuft demzufolge auch die Abtriebswelle 15 mit um, wodurch einerseits der obere Sperrbolzen 28 mit dem Ring 29 die Sperrscheibe 17 an einem weiteren seitlichen Ausschwenken hindert und andererseits praktisch ein reibungsfreier Durchtrieb erfolgt. Da auch bei hohen Drehzahlen an der Sperrscheibe 17 aufgrund ihres Schwerpunktes M im Bereich der Drehachse 16 keine Fliehkräfte auftreten, bleibt auch der Durchtrieb über den gesamten Drehzahlbereich stabil erhalten.

Bei linksdrehendem Antrieb greift dagegen im Berührungspunkt 43 des Treibbolzens 24 mit der Sperrscheibe 17 eine Kraft an, die in der Wirklinie b vom Berührungspunkt 43 aus den Schnittbereich 38 der beiden Reibungswinkel 34, 36 schneidet. Dies hat zur Folge, dass bei Linksdrehung die Sperrscheibe 17 vom Treibbolzen 24 um die Schwenkachse 32 soweit nach links verschwenkt, bis diese Kraft im Berührungspunkt 40 der Sperrscheibe 17 mit dem Sperrbolzen 28 nach dem Zusammendrücken des elastischen Ringes 29 von diesem aufgenommen wird. Auch in diesem Fall wird die Reibung zwischen den Klemmbolzen 19, 20 und den Sperrringwänden 18 aufgehoben, so dass die Sperrscheibe 17 nunmehr auch in der anderen Drehrichtung mit umläuft. Die sich drehende Sperrscheibe 17 nimmt dabei den Sperrbolzen 28 mit, so dass dadurch auch die Abtriebswelle 15 mitgedreht wird. Auch hier erfolgt somit im Durchtrieb eine Übertragung von Drehmomenten von der Antriebswelle 14 über die Sperrscheibe 17 zur Abtriebswelle 15, wobei auch hier die Klemmbolzen 19, 20 praktisch reibungsfrei an den Sperrringwänden 18 mit umlaufen. Auch hier wird ein weiteres seitliches Ausschwenken der Sperrscheibe 17 verhindert, indem sie sich im Berührungspunkt 39 mit dem elastischen Ring 29 am unteren Sperrbolzen 27 abstützt.

Bei einem Abfall oder Wegfall des lastseitigen Drehmomentes durch Abschalten oder Stillsetzen des nicht dargestellten Antriebes soll durch die Lastdrehmomentsperre ein Verdrehen der Abtriebswelle durch eine dort angekoppelte Last für beide Drehrichtungen zuverlässig verhindert werden. Dies geschieht durch ein Verschwenken der Sperrscheibe 17 nach rechts wie folgt:
Beim Auftreten eines im Hinblick auf Figur 1 links drehenden Lastdrehmomentes an der Abtriebswelle 15 tritt mit dem Zusammendrücken des Federelementes 29 im Berührungspunkt 39 des unteren Sperrbolzens 27 mit der Sperrscheibe 17 eine Kraft in der durch diesen Berührungspunkt 39 laufenden Wirklinie c auf, welche durch den Schnittbereich 38 der beiden Reibwinkel 34, 36 geht. Mit dieser Kraft wird nun die Sperrscheibe 17 um ihre Schwenkachse 32 etwas nach rechts verschwenkt, wodurch die beiden Klemmbolzen 19, 20 sich an ihren Berührungspunkten 35, 37 mit den Sperrringwänden 18 durch einen sogenannten Verkantungseffekt selbsttätig festklemmen. Die Sperrscheibe 17 wird damit festgesetzt, so dass eine Übertragung des Drehmomentes auf die Antriebswelle 14 nicht erfolgen kann.

Bei einem abtriebsseitig auftretenden Lastdrehmoment für eine Drehung der Abtriebswelle 15 nach rechts wird die Sperre durch den oberen Sperrbolzen 28 ausgelöst und in diesem Fall tritt mit dem Zusammendrücken des Federelementes 29 im Berührungspunkt 40 des oberen Sperrbolzens 28 mit der Sperrscheibe 17 eine Kraft in der Wirklinie d auf, die ebenfalls den Schnittbereich 38 der beiden Reibungswinkel 34, 36 schneidet und die folglich ebenfalls ein Verschwenken der Sperrscheibe 17 um die Schwenkachse 32 nach rechts zur Auslösung einer selbsttätigen Verklemmung der Klemmbolzen 19 und 20 an den Sperrringwänden 18 bewirkt. Auch hierbei wird das Abtriebsdrehmoment von der Sperrscheibe 17 und dem damit an den Sperrringwänden 18 arretierten Gehäuse 11 aufgenommen und nicht auf die Antriebswelle 14 übertragen.

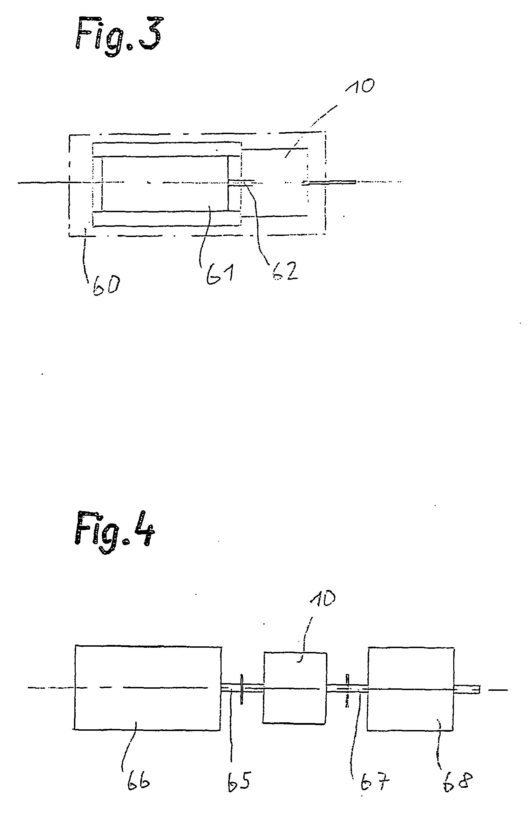

Figur 3 zeigt in schematischer Darstellung die Anwendung einer Lastdrehmomentsperre 10 gemäß Figur 1 und 2 in einer Antriebseinheit 60, in der sie mit einem Elektromotor 61 derart zusammengefasst ist, dass die Abtriebswelle 62 des Elektromotors 61 zugleich die Antriebswelle der Lastdrehmomentsperre 10 bildet. Eine solche Applikation ist beispielsweise in Kraftfahrzeugen für die Antriebe von Scheibenwischer, Fensterheber, Sitzverstellung, Kupplungssteller und dergleichen von Vorteil, da hiermit die Möglichkeit besteht, die erzielte Zwischen- oder Endposition des Aggregates exakt beizubehalten, was beispielsweise bei Verstellantrieben zwingend erforderlich ist.

In Figur 4 ist als weitere Anwendung der Lastdrehmomentsperre 10 aus Figur 1 und 2 diese in einem Antriebsstrang mit einem Getriebe dargestellt. Da z. B. auf dem Gebiet der Elektrowerkzeuge oder beispielsweise bei Seilwinden häufig schnelllaufende elektromotorische Antriebe mit einem selbsthemmenden Getriebe verwendet werden, ergibt sich durch die Reibverluste solcher Getriebe ein Gesamtwirkungsgrad von deutlich unter 50%. Gemäß Figur 4 ist nunmehr vorgesehen, die Lastdrehmomentsperre 10 zwischen der Abtriebswelle 65 eines Elektromotors 66 und einer Antriebswelle 67 einer Getriebeeinheit 68 ohne Selbsthemmung einzusetzen, wodurch sich der Gesamtwirkungsgrad deutlich über 50% verbessern läßt.

## Patentansprüche

1. Lastdrehmomentsperre (10) zum selbsttätigen Sperren lastseitiger Drehmomente bei Ab- oder Wegfall eines antriebsseitigen Drehmomentes unter Beibehaltung der Übertragungsmöglichkeit antriebsseitiger Drehmomente von einer Antriebswelle (14) auf eine Abtriebswelle (15) der Lastdrehmomentsperre, bestehend aus einem gestellfesten Gehäuse (11) mit mindestens einem damit fest verbundenen Sperrring (18) und mit mindestens einem damit zusammenwirkenden, mit der Antriebswelle umlaufenden Sperrkörper (17), welcher Sperrmittel (19, 20) aufweist, die sich einerseits beim Auftreten eines lastseitigen Drehmomentes unter Wegfall eines entsprechend großen antriebsseitigen Drehmomentes durch Verschwenken des mindestens einen Sperrkörpers in die eine Drehrichtung mittels mindestens eines Sperrelementes (27, 28) der Abtriebswelle (15) gegen die Angriffsflächen des mindestens einen Sperrringes (18) andrücken und die sich andererseits beim Auftreten eines antriebsseitigen Drehmomentes durch Verschwenken des mindestens einen Sperrkörpers in die andere Drehrichtung mittels mindestens eines Treibelementes (23, 24) der Antriebswelle (14) von den Angriffsflächen des mindestens einen Sperrringes lösen, **wobei** der Sperrkörper (17) derart ausgebildet ist, dass sein Masseschwerpunkt (M) im Bereich der Drehachse (16) der miteinander fluchtenden Antriebs- (14) und Abtriebswelle (15) liegt, **wobei der Sperrkörper (17) als Sperrscheibe gestaltet ist, die senkrecht zur Drehachse (16) im Gehäuse (11) angeordnet und vorzugsweise kreis-beziehungsweise kreisringförmig ausgebildet ist, dadurch gekennzeichnet, dass die Sperrmittel (19, 20) als achsparallel zur Drehachse (16) von der Stirnseite der Sperrscheibe (17) abstehende Klemmbolzen ausgebildet sind.**

2. Lastdrehmomentsperre nach Anspruch 1, **dadurch gekennzeichnet, dass** die Sperrscheibe (17) mindestens zwei auf unterschiedlich großen Radien und in Umfangsrichtung um einen Winkel (α) zueinander versetzte Sperrmittel (19, 20) aufweist, von denen das eine Sperrmittel (19) mit der Aussenseite (21) des mindestens einen gehäusefesten Sperrringes (18) und das andere Sperrmittel (20) mit dessen Innenseite (22) zusammenwirkt.

3. Lastdrehmomentsperre nach Anspruch 2, **dadurch gekennzeichnet, dass** auf beiden Stirnseiten der Sperrscheibe (17) je zwei miteinander fluchtende Sperrmittel (19, 20) spiegelbildlich angeordnet sind, die mit je einem von zwei beidseitig zur Sperrscheibe (17) gehäusefest angeordneten Sperrringen (18) zusammenwirken.

4. Lastdrehmomentsperre nach Anspruch 1, **dadurch gekennzeichnet, dass** die Sperrringe (18) als konzentrisch zur Drehachse (16) von je einer Stirnseite (11a, 11b) des Gehäuses (11) nach innen bis vor die Sperrscheibe (17) vorstehende Sperrringwand ausgebildet sind, an deren Aussen- (21) und Innenseite (22) je ein Klemmbolzen (19, 20) der Sperrscheibe (17) anzugreifen vermag.

5. Lastdrehmomentsperre nach einem der Ansprüche 2 bis 4, **dadurch gekennzeichnet, dass** die Sperrmittel (19, 20) in einem radial äußeren Bereich der Sperrscheibe (17) angeordnet sind, wobei die Treib- (23, 24) und Sperrelemente (27, 28) der Antriebs- (14) und Abtriebswelle (15) zum Verschwenken der Sperrscheibe (17) an deren radial inneren Bereich angreifen.

6. Lastdrehmomentsperre nach Anspruch 5, **dadurch gekennzeichnet, dass** bezogen auf eine durch die Sperrmittel (19, 20) verlaufende und über die Drehachse (16) aufgespannte erste Ebene (33) das mindestens eine Treibelement (23, 24) auf der einen Seite dieser Ebene (33) und das mindestens eine Sperrelement (27, 28) auf der anderen Seite dieser Ebene (33) an der Sperrschelbe (17) derart angreift, dass sie die Sperrscheibe (17) zum Lösen beziehungsweise Sperren der Sperrmittel (19, 20) senkrecht zu dieser ersten Ebene (33) in die eine beziehungsweise entgegengesetzte andere Richtung verschwenken.

7. Lastdrehmomentsperre nach Anspruch 6, **dadurch gekennzeichnet, dass** bei einer in beide Drehrichtungen wirksamen Sperre für jede Drehrichtung je ein Treibelement (23, 24) und je ein Sperrelement (27, 28) an der Sperrscheibe (17) angreift.

8. Lastdrehmomentsperre nach Anspruch 7, **dadurch gekennzeichnet, dass** bezogen auf eine senkrecht zur ersten über die Drehachse (16) aufgespannten zweiten Ebene (44) je ein Treib- (23) und Sperrelement (27) auf der einen Seite dieser zweiten Ebene (44) und je ein Treib- (24) und Sperrelement (28) auf der anderen Seite dieser zweiten Ebene (44) an der Sperrscheibe (17) angreift.

9. Lastdrehmomentsperre nach einem der Ansprüche 1 bis 8, **dadurch gekennzeichnet, dass** die Treibelemente (23, 24) als achsparallel zur Drehachse (16) von einem flanschartigen Ende (14a) der Antriebswelle (14) vorstehende Treibbolzen ausgebildet sind, die jeweils in eine größere Ausnehmung (25, 26) der Sperrscheibe (17) eingreifen.

10. Lastdrehmomentsperre nach einem der Ansprüche 1 bis 9, **dadurch gekennzeichnet, dass** die Sperrelemente (27, 28) als achsparallel zur Drehachse (16) von einem flanschartigen Ende (15a) der Abtriebswelle (15) vorstehende Sperrbolzen ausgebildet sind, die jeweils vorzugsweise zusammen mit einem Federelement (29) in eine größere Ausnehmung (30, 31) der Sperrscheibe (17) eingreifen.

11. Lastdrehmomentsperre nach einem der Ansprüche 6 bis 10, **dadurch gekennzeichnet, dass** in der Ruhelage der Sperrscheibe (17) das mindestens eine Treibelement (23, 24) auf seiner der ersten Ebene (33) zugewandten Seite einen Berührungspunkt (42,43) mit der Sperrscheibe (17) bildet.

12. Lastdrehmomentsperre nach Anspruch 11, **dadurch gekennzeichnet, dass** in der Ruhelage der Sperrscheibe (17) das mindestens eine Sperrelement (27, 28) auf seiner der ersten Ebene (33) zugewandten Seite einen geringen Abstand (41) zu einem Berührungspunkt (39, 40) mit der Sperrscheibe (17) aufweist.

13. Lastdrehmomentsperre nach Anspruch 10 und 12, **dadurch gekennzeichnet, dass** der Abstand (41) von dem Federelement (29) an den das Sperrelement bildenden Sperrbolzen (27, 28) überbrückt ist.

14. Lastdrehmomentsperre nach Anspruch 9 und 10, **dadurch gekennzeichnet, dass** die flanschartigen Enden (14a, 15a) der Antriebs- (14) und Abtriebswelle (15) an den gegenüberliegenden Stirnseiten (11a, 11b) des Gehäuses (11) gelagert sind.

15. Lastdrehmomentsperre nach Anspruch 14, **dadurch gekennzeichnet, dass** die Sperrscheibe (17) zwischen den voneinander beabstandeten, flanschartigen Enden (14a, 15a) der Antriebs- (14) und Abtriebswelle (15) angeordnet ist.

16. Lastdrehmomentsperre nach Anspruch 15, **dadurch gekennzeichnet, dass** die Sperrscheibe (17) mit einer zentrischen Öffnung (47) versehen ist, durch die ein Lagerzapfen (48) der Abtriebswelle (15) hindurchragt, der in einem in einer stirnseitigen Lagerbohrung (50) der Antriebswelle (14) eingesetzten Lager (49) aufgenommen ist.

17. Lastdrehmomentsperre nach einem der Ansprüche 1 bis 16, **dadurch gekennzeichnet, dass** an dem den Sperrmitteln (19, 20) diametral gegenüberliegenden Umfangsbereich der Sperrscheibe (17) eine Materialanhäufung (45) derart angeordnet ist, dass der Masseschwerpunkt (M) der Sperrscheibe (17) möglichst genau auf der Drehachse (16) liegt.

18. Lastdrehmomentsperre nach einem der Ansprüche 1 bis 17, **dadurch gekennzeichnet, dass** das Gehäuse (11) zylindrisch ausgebildet ist, wobei zwischen der Sperrscheibe (17) und der Innenwandung (12a) der äußeren Gehäusewand (12) ein für die Schwenkbewegung der Sperrscheibe (17) zum Lösen beziehungsweise Sperren der Sperrmittel (19, 20) ausreichender Ringluftspalt (46) liegt.

19. Lastdrehmomentsperre nach einem der vorhergehenden Ansprüche.
**dadurch gekennzeichnet, dass** sie mit einem Elektromotor (61) zu einer Antriebseinheit (60) zusammenfassbar ist, indem die Abtriebswelle (62) des Elektromotors (61) zugleich die Antriebswelle der Lastdrehmomentsperre (10) bildet.

20. Lastdrehmomentsperre nach einem der vorhergehenden Ansprüche, **dadurch gekennzeichnet, dass** sie zwischen der Abtriebswelle (65) eines Elektromotors (66) und der Antriebswelle (67) einer nicht selbsthemmenden Getriebeeinheit (68) einsetzbar ist.

## Claims

1. Load torque blocking device (10) for the automatic blocking of load-side torques in the event of the decrease or lapse of a drive-side torque, while maintaining the possibility of transferring drive-side torques from a drive shaft (14) to a driven shaft (15) of the load torque blocking device, consisting of a frame-fixed housing (11) with at least one blocking ring (18) firmly connected thereto and with at least one blocking body (17) which cooperates therewith and rotates with the drive shaft and which has blocking means (19, 20) which, on the one hand, when a load-side torque occurs, at the same time as the lapse of a correspondingly high drive-side torque, press against the engagement surfaces of the at least one blocking ring (18) as a result of the pivoting of the at least one blocking body in one direction of rotation by means of at least one blocking element (27, 28) of the driven shaft (15) and which, on the other hand, when a drive-side torque occurs, come loose from the engagement surfaces of the at least one blocking ring as a result of the pivoting of the at least one blocking body in the other direction of rotation by means of at least one driving element (23, 24) of the drive shaft (14), the blocking body (17) being designed in such a way that its mass centre of gravity (M) lies in the region of the axis of rotation (16) of the mutually aligned drive shaft (14) and driven shaft (15), the blocking body (17) being configured as a blocking disc which is arranged perpendicularly to the axis of rotation (16) in the housing (11) and is preferably of circular or annular design, **characterized in that** the blocking means (19, 20) are designed as clamping bolts projecting from the end face of the blocking disc (17) axially parallel to the axis of rotation (16).

2. Load torque blocking device according to Claim 1, **characterized in that** the blocking disc (17) has at least two blocking means (19, 20) which are offset to one another by the amount of an angle (α) on radii of different sizes and in the circumferential direction and of which one blocking means (19) cooperates with the outside (21) of the at least one housing-fixed blocking ring (18) and the other blocking means (20) cooperates with the inside (22) of the latter.

3. Load torque blocking device according to Claim 2, **characterized in that** two mutually aligned blocking means (19, 20) are arranged mirror-symmetrically on each of the two end faces of the blocking disc (17) and cooperate in each case with one of two blocking rings (18) arranged in a housing-fixed manner on both sides of the blocking disc (17).

4. Load torque blocking device according to Claim 1, **characterized in that** the blocking rings (18) are designed as blocking-ring walls which project concentrically to the axis of rotation (16) in each case from an end face (11a, 11b) of the housing (11) inwards to in front of the blocking disc (17) and on the outside (21) and inside (22) of which a clamping bolt (19, 20) of the blocking disc (17) can engage in each case.

5. Load torque blocking device according to one of Claims 2 to 4, **characterized in that** the blocking means (19, 20) are arranged in a radially outer region of the blocking disc (17), the driving (23, 24) and blocking (27, 28) elements of the drive shaft (14), and driven shaft (15) engaging on the radially inner region of the blocking disc (17) for pivoting the latter.

6. Load torque blocking device according to Claim 5, **characterized in that**, with respect to a first plane (33) running through the blocking means (19, 20) and spanning the axis of rotation (16), the at least one driving element (23, 24) engages on the blocking disc (17) on one side of this plane (33) and the at least one blocking element (27, 28) engages on the said blocking disc on the other side of this plane (33), in such a way that, to release or to block the blocking means (19, 20), they pivot the blocking disc (17) perpendicularly to this first plane (33) in one direction or in the other opposite direction.

7. Load torque blocking device according to Claim 6, **characterized in that**, in the case of a blocking device active in both directions of rotation, a driving element (23, 24) and a blocking element (27, 28) engage in each case on the blocking disc (17) for each direction of rotation.

8. Load torque blocking device according to Claim 7, **characterized in that**, with respect to a second plane (44) spanning the axis of rotation (16) perpendicularly to the first, in each case a driving element (23) and a blocking element (27) engage on the blocking disc (17) on one side of this second plane (44) and in each case a driving element (24) and a blocking element (28) engage on the said blocking disc on the other side of this second plane (44).

9. Load torque blocking device according to one of Claims 1 to 8, **characterized in that** the driving elements (23, 24) are designed as driving bolts which project from a flange-like end (14a) of the drive shaft (14) axially parallel to the axis of rotation (16) and which engage in each case into a larger recess (25, 26) of the blocking disc (17).

10. Load torque blocking device according to one of Claims 1 to 9, **characterized in that** the blocking elements (27, 28) are designed as blocking bolts which project from a flange-like end (15a) of the driven shaft (15) axially parallel to the axis of rotation (16) and which in each case engage, preferably together with a spring element (29), into a larger recess (30, 31) of the blocking disc (17).

11. Load torque blocking device according to one of Claims 6 to 10, **characterized in that**, in the position of rest of the blocking disc (17), the at least one driving element (23, 24) forms, on its side facing the first plane (33), a point of contact (42, 43) with the blocking disc (17).

12. Load torque blocking device according to Claim 11, **characterized in that**, in the position of rest of the blocking disc (17), the at least one blocking element (27, 28) has, on its side facing the first plane (33), a slight clearance (41) with respect to a point of contact (39, 40) with the blocking disc (17).

13. Load torque blocking device according to Claims 10 and 12, **characterized in that** the clearance (41) is bridged by the spring element (29) on the blocking bolts (27, 28) forming the blocking element.

14. Load torque blocking device according to Claims 9 and 10, **characterized in that** the flange-like ends (14a, 15a) of the drive shaft (14) and driven shaft (15) are mounted on the opposite end faces (11a, 11b) of the housing (11).

15. Load torque blocking device according to Claim 14, **characterized in that** the blocking disc (17) is arranged between the spaced-apart flange-like ends (14a, 15a) of the drive shaft (14) and driven shaft (15).

16. Load torque blocking device according to Claim 15, **characterized in that** the blocking disc (17) is provided with a central orifice (47), through which a bearing journal (48) of the driven shaft (15) projects, the said bearing journal being received in a bearing (49) inserted in an end-face bearing bore (50) of the drive shaft (14).

17. Load torque blocking device according to one of Claims 1 to 16, **characterized in that**, on that circumferential region of the blocking disc (17) which lies diametrically opposite the blocking means (19, 20), a material accumulation (45) is arranged in such a way that the mass centre of gravity (M) of the blocking disc (17) lies as exactly as possible on the axis of rotation (16).

18. Load torque blocking device according to one of Claims 1 to 17, **characterized in that** the housing (11) is of cylindrical design, an annular air gap (46), sufficient for the pivoting movement of the blocking disc (17) to release or to block the blocking means (19, 20), lying between the blocking disc (17) and the inner wall (12a) of the outer housing wall (12).

19. Load torque blocking device according to one of the preceding claims, **characterized in that** it can be combined with an electric motor (61) to form a drive unit (60), **in that** the driven shaft (62) of the electric motor (61) at the same time forms the drive shaft of the load torque blocking device (10).

20. Load torque blocking device according to one of the preceding claims, **characterized in that** it can be inserted between the driven shaft (65) of an electric motor (66) and the drive shaft (67) of a non-selflocking transmission unit (68).

## Revendications

1. Dispositif de blocage de couple de charge (10) pour le blocage automatique des couples de charge en cas de chute ou d'absence de couple d'entraînement tout en conservant la possibilité de transfert de couples d'entraînement depuis un arbre d'entraînement (14) à un arbre de prise de force (15) du dispositif de blocage de couple de charge, constitué d'un boîtier (11) fixé au bâti avec au moins une bague de blocage (18) connectée fixement à celui-ci, et avec au moins un corps de blocage (17) entourant l'arbre d'entraînement, coopérant avec la bague de blocage, lequel corps de blocage présente des moyens de blocage (19, 20), qui s'appliquent d'une part, en présence d'un couple de charge et en l'absence d'un couple d'entraînement d'ampleur correspondante, par pivotement de l'au moins un corps de blocage dans un sens de rotation au moyen d'au moins un élément de blocage (27, 28) de l'arbre de prise de force (15), contre les surfaces d'engagement de l'au moins une bague de blocage (18) et qui se desserrent d'autre part, en présence d'un couple d'entraînement par pivotement de l'au moins un corps de blocage dans l'autre sens de rotation au moyen d'au moins un élément d'entraînement (23, 24) de l'arbre d'entraînement (14) des surfaces d'engagement de l'au moins une bague de blocage, le corps de blocage (17) étant réalisé de telle sorte que son centre de masse (M) se situe dans la région de l'axe de rotation (16) des arbres d'entraînement (14) et de prise de force (15) en affleurement l'un avec l'autre, le corps de blocage (17) étant réalisé sous forme de disque de blocage qui est disposé perpendiculairement à l'axe de rotation (16) dans le boîtier (11) et qui est réalisé de préférence sous forme circulaire ou annulaire circulaire, **caractérisé en ce que** les moyens de blocage (19, 20) sont réalisés sous forme de boulons de serrage saillant avec leurs axes parallèles à l'axe de rotation (16) depuis le côté frontal du disque de blocage (17).

2. Dispositif de blocage de couple de charge selon la revendication 1, **caractérisé en ce que** le disque de blocage (17) présente au moins deux moyens de blocage (19, 20) décalés l'un par rapport à l'autre sur des rayons différents et dans la direction périphérique suivant un angle (α), l'un des moyens de blocage (19) coopérant avec le côté extérieur (21) de l'au moins une bague de blocage (18) fixée au boîtier et l'autre moyen de blocage (20) coopérant avec le côté intérieur (22) de celle-ci.

3. Dispositif de blocage de couple de charge selon la revendication 2, **caractérisé en ce que** sur les deux côtés frontaux du disque de blocage (17) sont disposés, de manière symétrique inversée, à chaque fois deux moyens de blocage (19, 20) en affleurement l'un avec l'autre, qui coopèrent avec à chaque fois l'une de deux bagues de blocage (18) disposées de manière fixée au boîtier de chaque côté du disque de blocage (17).

4. Dispositif de blocage de couple de charge selon la revendication 1, **caractérisé en ce que** les bagues de blocage (18) sont réalisées sous forme de paroi de bague de blocage saillant concentriquement à l'axe de rotation (16) depuis un côté frontal respectif (11a, 11b) du boîtier (11) vers l'intérieur jusqu'avant le disque de blocage (17), sur le côté extérieur (21) et intérieur (22) de laquelle peut s'engager un boulon de serrage respectif (19, 20) du disque de blocage (17).

5. Dispositif de blocage de couple de charge selon l'une quelconque des revendications 2 à 4, **caractérisé en ce que** les moyens de blocage (19, 20) sont disposés dans une région radialement extérieure du disque de blocage (17), les éléments d'entraînement (16) et de blocage (27, 28) de l'arbre d'entraînement (14) et de prise de force (15) venant en prise pour le pivotement du disque de blocage (17) contre sa région radialement interne.

6. Dispositif de blocage de couple de charge selon la revendication 5, **caractérisé en ce que** par rapport à un premier plan (33) s'étendant à travers les moyens de blocage (19, 20) et sous-tendu par l'axe de rotation (16), l'au moins un élément d'entraînement (23, 24) vient en prise d'un côté de ce plan (33) et l'au moins un élément de blocage (27, 28) vient en prise de l'autre côté de ce plan (33) sur le disque de blocage (17), de telle sorte qu'ils pivotent le disque de blocage (17) en vue du desserrage ou du blocage des moyens de blocage (19, 20) perpendiculairement à ce premier plan (33) dans un sens ou dans l'autre sens opposé.

7. Dispositif de blocage de couple de charge selon la revendication 6, **caractérisé en ce que** dans le cas d'un dispositif de blocage agissant dans les deux sens de rotation, pour chaque sens de rotation, à chaque fois un élément d'entraînement (23, 24) et à chaque fois un élément de blocage (27, 28) viennent en prise sur le disque de blocage (17).

8. Dispositif de blocage de couple de charge selon la revendication 7, **caractérisé en ce que** par rapport à un deuxième plan (44) sous-tendu par l'axe de rotation (16) perpendiculairement au premier, à chaque fois un élément d'entraînement (23) et un élément de blocage (27) viennent en prise d'un côté de ce deuxième plan (44) et à chaque fois un élément d'entraînement (24) et un élément de blocage (28) viennent en prise de l'autre côté de ce deuxième plan (44) sur le disque de blocage (17).

9. Dispositif de blocage de couple de charge selon l'une quelconque des revendications 1 à 8, **caractérisé en ce que** les éléments d'entraînement (23, 24) sont réalisés sous forme de boulons d'entraînement saillant avec leurs axes parallèles à l'axe de rotation (16) depuis une extrémité de type bride (14a) de l'arbre d'entraînement (14), qui viennent en prise à chaque fois dans un évidement plus grand (25, 26) du disque de blocage (17).

10. Dispositif de blocage de couple de charge selon l'une quelconque des revendications 1 à 9, **caractérisé en ce que** les éléments de blocage (27, 28) sont réalisés sous forme de boulons de blocage saillant avec leurs axes parallèles à l'axe de rotation (16) depuis une extrémité de type bride (15a) de l'arbre de prise de force (15), qui viennent en prise à chaque fois de préférence conjointement avec un élément de ressort (29) dans un évidement plus grand (30, 31) du disque de blocage (17).

11. Dispositif de blocage de couple de charge selon l'une quelconque des revendications 6 à 10, **caractérisé en ce que** dans la position de repos du disque de blocage (17), l'au moins un élément d'entraînement (23, 24) forme sur son côté tourné vers le premier plan (33) un point de contact (42, 43) avec le disque de blocage (17).

12. Dispositif de blocage de couple de charge selon la revendication 11, **caractérisé en ce que** dans la position de repos du disque de blocage (17), l'au moins un élément de blocage (27, 28) présente sur son côté tourné vers le premier plan (33) une faible distance (41) à un point de contact (39, 40) avec le disque de blocage (17).

13. Dispositif de blocage de couple de charge selon les revendications 10 et 12, **caractérisé en ce que** la distance (41) de l'élément de ressort (29) aux boulons de blocage (27, 28) formant l'élément de blocage est surmontée.

14. Dispositif de blocage de couple de charge selon les revendications 9 et 10, **caractérisé en ce que** les extrémités de type bride (14a, 15a) de l'arbre d'entraînement (14) et de l'arbre de prise de force (15) sont montées sur des côtés frontaux opposés (11a, 11b) du boîtier (11).

15. Dispositif de blocage de couple de charge selon la revendication 14, **caractérisé en ce que** le disque de blocage (17) est disposé entre les extrémités de type bride (14a, 15a) espacées l'une de l'autre de l'arbre d'entraînement (14) et de l'arbre de prise de force (15).

16. Dispositif de blocage de couple de charge selon la revendication 15, **caractérisé en ce que** le disque de blocage (17) est pourvu d'une ouverture centrale (47), à travers laquelle fait saillie un tourillon de palier (48) de l'arbre de prise de force (15), qui est reçu dans un palier (49) inséré dans un alésage de palier frontal (50) de l'arbre d'entraînement (14).

17. Dispositif de blocage de couple de charge selon l'une quelconque des revendications 1 à 16, **caractérisé en ce que** sur la région périphérique du disque de blocage (17) diamétralement opposée aux moyens de blocage (19, 20) est disposée une accumulation de matière (45) de telle sorte que le centre de masse (M) du disque de blocage (17) se situe aussi exactement que possible sur l'axe de rotation (16).

18. Dispositif de blocage de couple de charge selon l'une quelconque des revendications 1 à 17, **caractérisé en ce que** le boîtier (11) est réalisé sous forme cylindrique, entre le disque de blocage (17) et la paroi intérieure (12a) de la paroi extérieure du boîtier (12) étant disposé un entrefer annulaire (46) suffisant pour le mouvement de pivotement du disque de blocage (17) pour desserrer respectivement bloquer les moyens de blocage (19, 20).

19. Dispositif de blocage de couple de charge selon l'une quelconque des revendications précédentes, **caractérisé en ce qu'**il peut être assemblé avec un moteur électrique (61) pour former une unité d'entraînement (60), l'arbre de prise de force (62) du moteur électrique (61) formant pour cela aussi l'arbre d'entraînement du dispositif de blocage de couple de charge (10).

20. Dispositif de blocage de couple de charge selon l'une quelconque des revendications précédentes, **caractérisé en ce qu'**il peut être inséré entre l'arbre de prise de force (65) d'un moteur électrique (66) et l'arbre d'entraînement (67) d'une unité de transmission (68) non autobloquante.
